# EUROPÄISCHE PATENTSCHRIFT

(11) **EP 0 917 276 B1**
(45) Veröffentlichungstag und Bekanntmachung des Hinweises auf die Patenterteilung: **25.08.2004**
(21) Anmeldenummer: 98890328.2
(22) Anmeldetag: 10.11.1998
(51) Int. Cl.: H02K 5/22

(54) **Statorgehäuse für Elektromotoren**
Casing for an electric motor
Carcasse pour moteur électrique

(30) Priorität: 18.11.1997 AT 195597; 10.03.1998 AT 41898
(43) Veröffentlichungstag der Anmeldung: 19.05.1999
(73) Patentinhaber: ATB Austria Antriebstechnik Aktiengesellschaft, 8724 Spielberg (Steiermark) (AT)
(72) Erfinder: Sommer, Rudolf, 8715 St. Lorenzen (AT)
(74) Vertreter: Beer, Manfred, Dipl.-Ing.

(56) Entgegenhaltungen:
- EP-A- 0 560 493
- DE-A- 2 313 378
- DE-A- 4 444 309
- FR-A- 2 500 084
- GB-A- 2 238 433

## Beschreibung

Die Erfindung betrifft ein Statorgehäuse für Elektromotoren mit den Merkmalen des Oberbegriffes Anspruches 1.

Aus der FR-A-2 500 084 ist ein gattungsgemäßes Statorgehäuse für Elektromotoren bekannt, an dem ein Klemmkasten befestigt ist, dessen Stutzen durch eine Durchgangsöffnung ins Statorgehäuse greift. Der Klemmkasten kann mittes Schrauben mit dem Statorgehäuse verbunden werden.

Der Erfindung liegt die Aufgabe zugrunde, ein Statorgehäuse der eingangs genannten Gattung zur Verfügung zu stellen, bei dem der Klemmkasten einfach und dennoch erschütterungssicher befestigt werden kann, wobei ein sicheres Herausführen der Litzen durch das Statorgehäuse in den Klemmkasten gewährleistet ist.

Erfindungsgemäß wird diese Aufgabe mit einem Statorgehäuse mit Klemmkasten mit den Merkmalen des Anspruches 1 gelöst.

Bevorzugte und vorteilhafte Ausgestaltungen des erfindungsgemäßen Statorgehäuses sind Gegenstand der Unteransprüche.

Bei der Erfindung ergeben sich eine oder mehrere der nachstehend geschilderten Vorteile.

Dadurch, daß vom Boden des Klemmkastens weg ein Litzeneinführungsstutzen durch eine Öffnung im Statorgehäuse ragt, sind die Litzen, die vom Stator weg durch das Statorgehäuse in den Klemmkasten geführt sind, vor der Berührung mit metallischen Teilen des Statorgehäuses geschützt.

Durch diesen Stutzen in Verbindung mit dem in einer Ausführungsform um ihn herum angeordneten Kragen und den in den Raum zwischen dem Stutzen und dem Kragen hineinragenden Ansatz am Statorgehäuse, der die Öffnung im Statorgehäuse umgibt, ergibt sich nicht nur ein sicherer Sitz des Klemmkastens, sondern auch eine Labyrinthdichtung, so daß eine gute Abdichtung des Innenraums des Klemmkastens gegen Eindringen von Staub u. dgl. gewährleistet ist.

Das Befestigen des Klemmkastens am Statorgehäuse erfolgt durch drei Befestigungsschrauben, wobei diese Befestigungsschrauben gleichzeitig dazu dienen können, im Klemmkasten elektrische Bauteile, beispielsweise Erdungsbügel, festzulegen. Im Bereich der Durchtrittsöffnungen durch den Boden des Klemmkastens sind in einer Ausführungsform außen abstehende Hülsen vorgesehen, die unter Ausbildung von Labyrinthdichtungen über Sacklöcher zur Aufnahme von Verbindungsschrauben aufweisende Vorsprünge am Statorgehäuse greifen.

Das Zentrieren des Klemmkastens am Statorgehäuse gestaltet sich besonders einfach, wenn beispielsweise an einzelnen Kühlrippen bzw. an Verdickungen derselben anliegende Zentriervorsprünge am Klemmkastenboden vorgesehen sind. Insbesondere, wenn die Zentriervorsprünge am Boden des Klemmkastens als kreisbogenförmige Rippen ausgeführt sind und die Zentriervorsprünge an Kühlrippen des Statorgehäuses in Draufsicht etwa linsenförmige oder zylinderförmige Verdickungen der Kühlrippen sind, ergibt sich eine besonders sichere Zentrierung.

Insbesondere, wenn am Statorgehäuse mehrere, z.B. oben, rechts und links identisch ausgebildete Durchbrechungen (oder Vorbereitungen hiefür) und Befestigungsvorsprünge für einen Klemmkasten sowie gegebenfalls Rippen zugeordnete Zentriervorsprünge vorgesehen sind, kann der Klemmkasten beim erfindungsgemäßen Motor an verschiedenen Stellen, z.B. oben, rechts und/oder links angebracht werden. Die nicht benötigen Durchführungsöffnungen bleiben, vorzugsweise durch mit dem Statorgehäuse einstückig gegossene Verschlußdeckel mit einer Sollbruchstelle zum Heraustrennen des Deckels einfach verschlossen. Es wird nur der (wenigstens eine) Verschlußdeckel herausgebrochen, der an der Stelle des Statorgehäuses liegt, wo ein Klemmkasten befestigt werden soll.

Um ein- und denselben Klemmkasten rechts und links am Statorgehäuse befestigen zu können, sind am Statorgehäuse je Befestigungsstelle drei Verschraubungsvorsprünge mit je einem Sackloch vorgesehen, die zu einer durch die Achse des Statorgehäuses gehenden Ebene symmetrisch angeordnet sind.

In einer Ausführungsform der Erfindung kann vorgesehen sein, daß im Boden des Unterteils des Klemmkastens wenigstens ein Kanal vorgesehen ist, der aus dem Klemmkasten herausführt. Dabei ist bevorzugt, wenn der Kanal durch einen rohrförmigen Ansatz über die Umrißform des Klemmkastens seitlich hinaus verlängert ist. Bei dieser Ausführungsform des erfindungsgemäß vorgesehenen Klemmkastens, insbesondere seines Unterteils, ist es ohne weiteres möglich, elektrische Leitungen, z.B. Kondensatorkabel, in den Klemmkasten einzuführen und dort anzuschließen. Durch den wenigstens einen am Unterteil des Klemmkastens vorgesehenen, rohrförmigen Ansatz besteht die Möglichkeit, eine elektrische Leitung problemlos in den Klemmkasten einzuführen und dann beispielsweise durch einen Schrumpfschlauch, der auf den rohrförmigen Ansatz aufgeschoben ist und sich bis über das durch diesen eingeführte Kabel erstreckt, festzulegen.

Weitere Einzelheiten und Merkmale der Erfindung sowie Vorteile derselben ergeben sich aus der nachstehenden Beschreibung von Ausführungsbeispielen der Erfindung, in der auf die angeschlossenen Zeichnungen Bezug genommen wird.

Es zeigt:
Fig.1 teilweise geschnitten einen Elektromotor mit einem an seinem Statorgehäuse befestigten Klemmkasten,
Fig. 2 den Klemmkasten von seiner dem Statorgehäuse zuzukehrenden Seite aus gesehen,
Fig. 3 eine Seitenansicht zu Fig. 2,
Fig. 4 ein Statorgehäuse mit aufgesetztem Klemmkasten, teilweise im Schnitt,
Fig. 5 eine Einzelheit zu Fig. 4,
Fig. 6 ein Statorgehäuse von der Seite gesehen, daß die Abtriebseite rechts liegt,
Fig. 7 eine Einzelheit des Statorgehäuses im Schnitt längs der Linie VII-VII in Fig. 6,
Fig. 8 in Ansicht einen Deckel einer abgeänderten Ausführungsform des Klemmkastens,
Fig. 9 eine Draufsicht auf den Deckel aus Fig. 8,
Fig. 10 einen Schnitt längs der Linie X-X in Fig. 9,
Fig. 11 eine Innenansicht des Deckels aus Fig. 8,
Fig. 12 den zur Ausführungsform des Deckels nach Fig. 8 gehörenden Unterteil eines Klemmkastens in Draufsicht,
Fig. 13 einen Schnitt längs der Linie XIII-XIII in Fig. 12,
Fig. 14 einen Schnitt längs der Linie XIV-XIV in Fig. 12,
Fig. 15 einen Schnitt längs der Linie XV-XV in Fig. 12,
Fig. 16 einen Unterteil des Klemmenkastens in Ansicht von unten,
Fig. 17 in Ansicht ein Statorgehäuse, das insbesondere für die in den Fig. 8 bis 16 gezeigte Ausführungsform des Klemmkastens bestimmt ist,
Fig. 18 den Unterteil eines Klemmkastens in Schrägansicht von oben her gesehen,
Fig. 19 einen Unterteil von seiner Unterseite aus gesehen in Schrägansicht,
Fig. 20 eine Draufsicht auf den Unterteil des Klemmkastens und
Fig. 21 einen Schnitt längs der Linie B-B in Fig. 20.

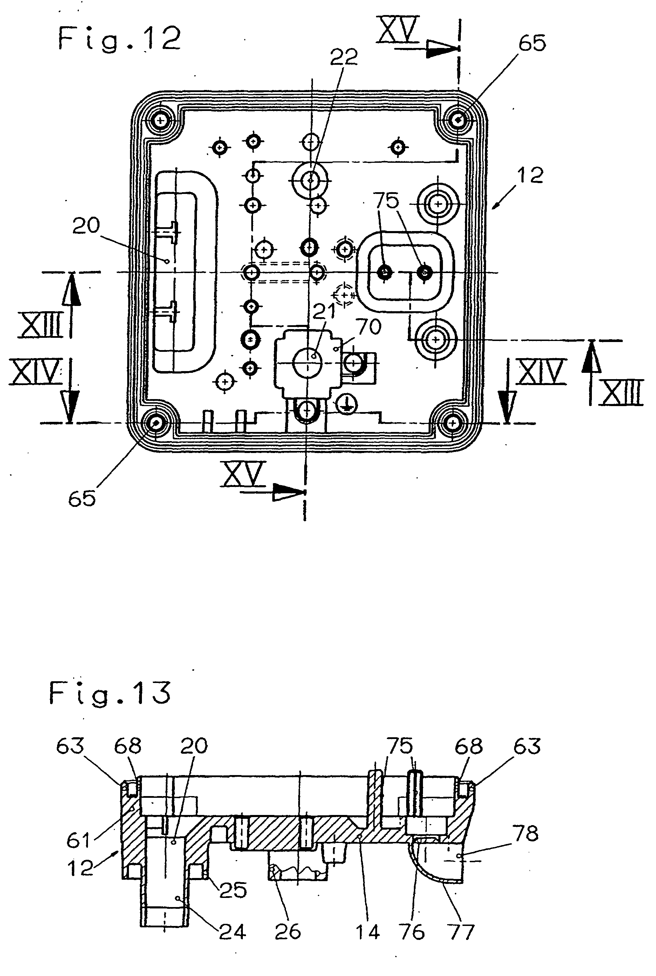

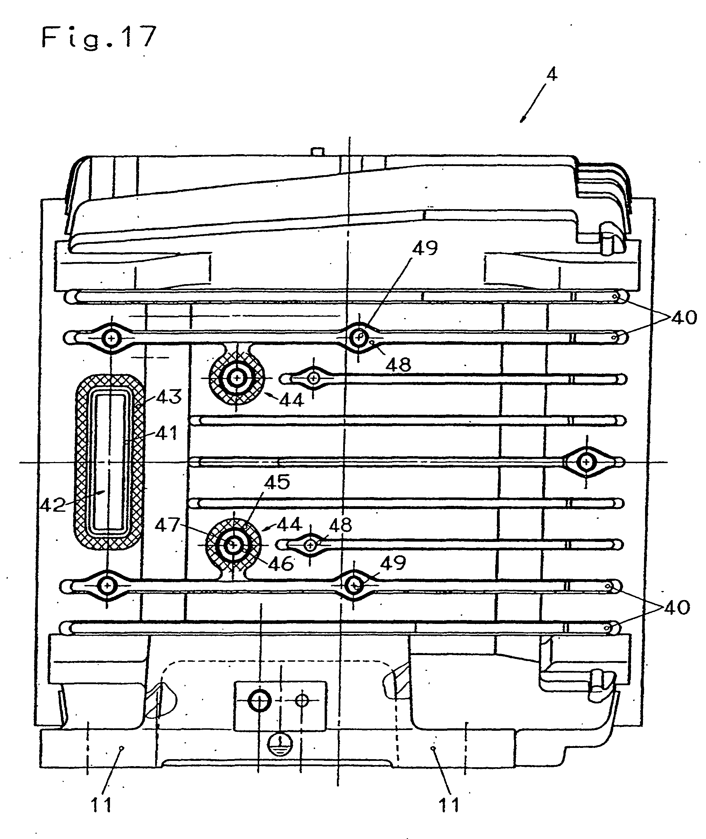

Die in den Fig. 12 bis 17 dargestellte Ausführungsform fällt hinsichtlich der nur zwei Durchgangslöcher 21, 22 nicht unter den Schutzbereich des Patentes.

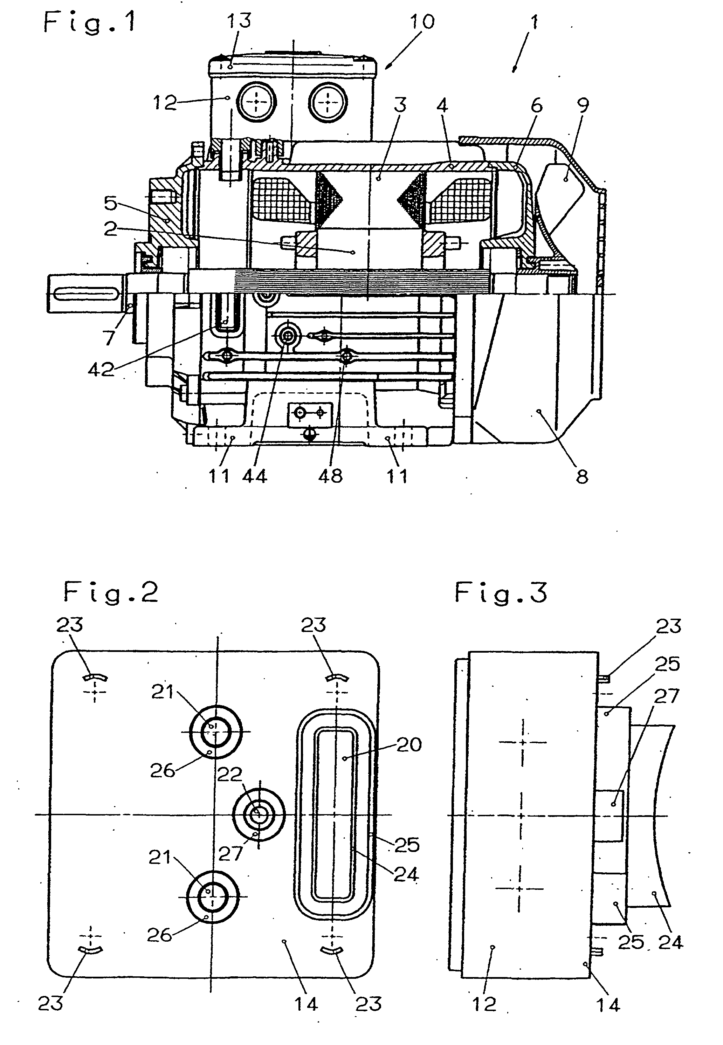

Ein Elektromotor 1, der in seinen wesentlichen Teilen in Fig. 1 gezeigt ist, besitzt einen Rotor 2 und einen Stator 3 sowie ein den Stator 3 umgebendes Statorgehäuse 4. In Lagerschilden 5 und 6 ist die Welle 7 des Rotors 2 drehbar gelagert. Durch eine Abdeckhaube 8 ist ein auf das der Abtriebseite gegenüberliegende Ende der Welle 7 aufgesetzte Gebläserad 9 geschützt.

Im Bereich des abtriebseitigen Endes des Elektromotors 1 (in Fig. 1 links) ist außen am Statorgehäuse 4 ein Klemmkasten 10 befestigt.

Das Statorgehäuse 4 ist bevorzugt so ausgebildet, daß es die für die Befestigung des Klemmkastens 10 erforderlichen Formgebungen und Befestigungsteile ("Befestigungsstellen") in Fig. 1 nach oben, nach vorne und nach hinten weisend aufweist, so daß ein Klemmkasten 10 wahlweise an einer oder mehreren der drei Befestigungsstellen am Statorgehäuse 4, also oben, rechts oder links befestigt werden kann.

Am Statorgehäuse 4 sind Füße 11 vorgesehen, über die der Elektromotor 1 an einem beliebigen Bauteil befestigt werden kann.

Der Klemmkasten 10 besteht aus einem am Statorgehäuse 4 befestigten Unterteil 12 und einem Deckel 13, der mit dem Unterteil 12 beispielsweise mit Schrauben verbunden werden kann.

Im Boden 14 des Unterteils 12 des Klemmkastens 10 sind eine längliche Durchgangsöffnung 20 sowie drei Befestigungslöcher 21, 22 und vier nach außen abstehende Zentrierrippen 23 vorgesehen.

Rings um die Durchgangsöffnung 20 für zur Wicklung des Stators 3 führende Litzen ist ein vom Boden 14 des Unterteils 12 des Klemmkastens 10 nach unten weisender Stutzen 24 vorgesehen, der außen mit Abstand von einem nach unten weisenden Kragen 25 umgeben ist.

Auch die Befestigungslöcher 21, 22 im Boden 14 des Unterteils 12 sind von nach unten weisenden, ringförmigen Ansätzen 26, 27 umgeben.

Die an der Unterseite des Bodens 14 vorgesehenen Zentrierrippen 23 sind gebogene Rippen, wobei die Rippen so gebogen sind, daß ihre konvexen Seiten von der Quersymmetrieebene der Durchgangsöffnung 20 weg weisen, also die hohlen Seiten der Zentrierrippen 23 einander jeweils paarweise gegenüberliegend zugekehrt sind. Die Zentrierrippen 23 sind im Bereich der vier Ecken des Unterteils 12 des Klemmkastens 10 angeordnet.

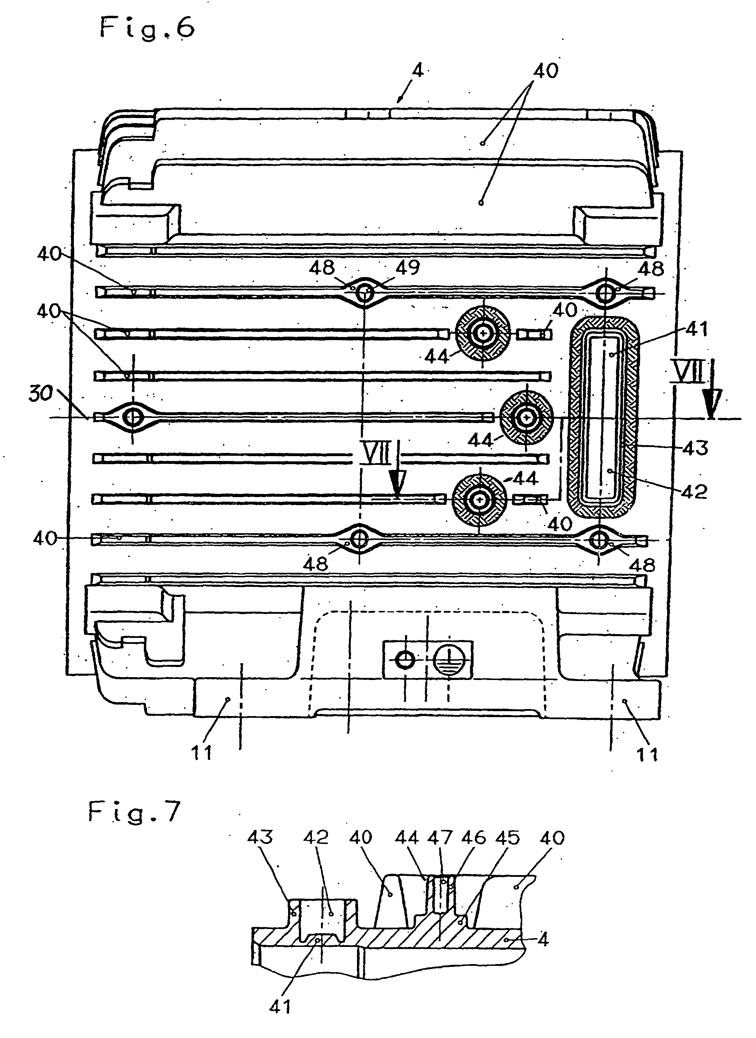

Das in Fig. 1 und 6 gezeigte Statorgehäuse 4 besitzt neben den bereits erwähnten Fußteilen 11 in üblicher Weise mehrere mach außen vorspringende, axial verlaufende Kühlrippen 40.

Wie bereits erwähnt, besteht die Möglichkeit, wenigstens einen Klemmkasten 10 am Statorgehäuse 4 rechts, links sowie oben zu befestigen, wobei das Statorgehäuse 4 die hiefür an den Befestigungsstellen vorgesehenen Formgebungen und Befestigungsteile sowohl an seiner den Füßen 11 gegenüberliegenden Oberseite als auch rechts und links aufweist.

Die Befestigungsstellen umfassen im einzelnen eine zunächst noch durch einen Deckel 41 (Fig. 7) verschlossene Durchgangsöffnung 42 für die zur Statorwicklung führenden Litzen. Die Durchgangsöffnung 42 ist von einem etwa rechteckförmigen oder langovalen Ansatz 43 umgeben. Für das Anschrauben des Klemmkastens 10 sind symmetrisch zur Durchgangsöffnung 42 in den Eckpunkten eines Dreieckes angeordnete Befestigungsansätze 44 vorgesehen, die aus einem Basisteil 45 und einer von diesem abstehenden hülsenförmigen Ausformung 46 gebildet sind. In das Sackloch 47 der Ausformung 46 können zum Befestigen des Klemmkastens 10 durch die Öffnungen 22 und 21 gesteckte Befestigungsschrauben eingedreht werden.

An den zu beiden Seiten der Durchgangsöffnung 42 liegenden Kühlrippen 40 sind Verdickungen 48 vorgesehen, die entweder so wie in Fig. 6 gezeigt, etwa linsenförmig sind oder wie in Fig. 1 gezeigt, etwa kreisförmige Grundrißflächen besitzen. Die Verdickungen 48 dienen als Gegenstücke für die Zentriervorsprünge 23 am Boden 14 des Klemmkastens 10, so daß dieser am Statorgehäuse 4 sicher gehalten ist.

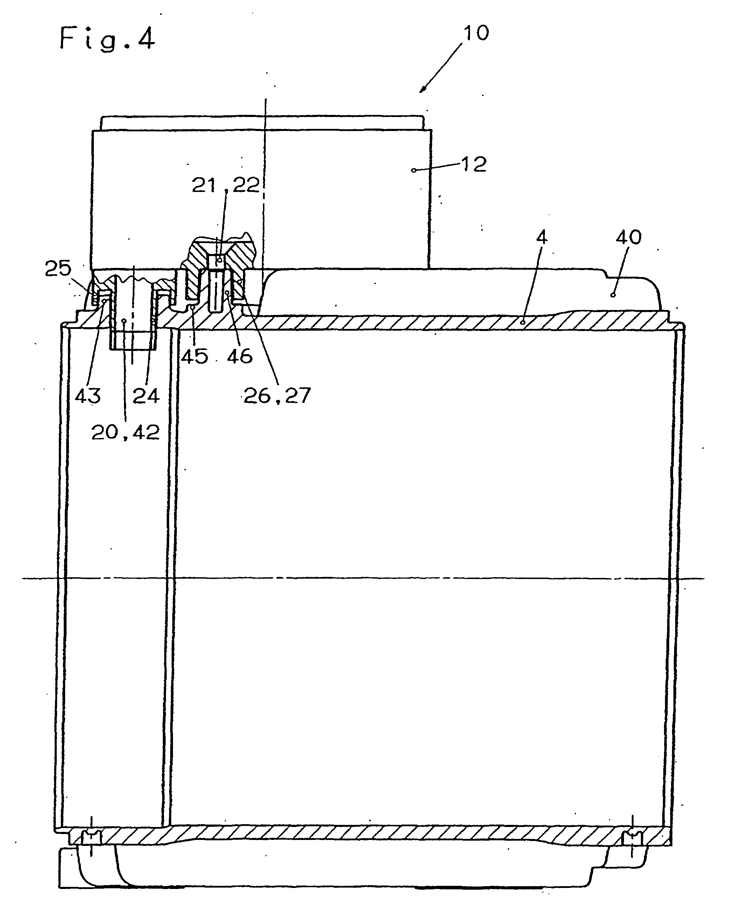

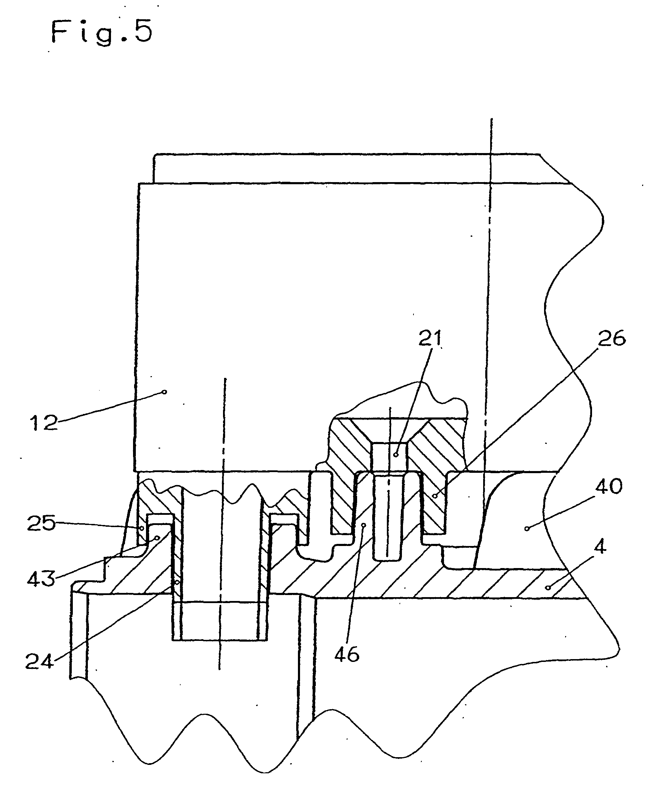

Wie in Fig. 4 und insbesondere Fig. 5 gezeigt, greift der die Öffnung 42 umgebende Ansatz 43 bei aufgesetztem Unterteil 12 des Klemmkastens 10 zwischen den dessen Durchgangsöffnung 20 umgebenden Stutzen 24 und den Kragen 25 unter Ausbilden einer Labyrinthdichtung ein. Der Stutzen 24 greift zur Gänze durch die Öffnung 42 im Statorgehäuse 4, so daß durch die Öffnung 42 bzw. 20 geführte Litzen nicht mit dem in der Regel aus Metall (Aluminium-Spritzguß) hergestellten Statorgehäuse 4 in, beispielsweise ihre Isolierung beschädigende, Berührung kommen können.

In ähnlicher Weise wird eine Labyrinthdichtung zwischen der hülsenförmigen Ausformung 46 des Statorgehäuses 4, die in den Kragen 25 um die Öffnung 21 bzw. 27 bei der Öffnung 22 eingreift, gebildet. Es ist auch gezeigt, daß bei montiertem Klemmkasten 10 dessen Unterteil 12 mit dem Boden 14 auf den freien Rändern der unter dem Klemmkasten 10 liegenden Kühlrippen 40 aufliegt, so daß ein sicherer Sitz erreicht wird und der Klemmkasten 10 unterlüftet ist.

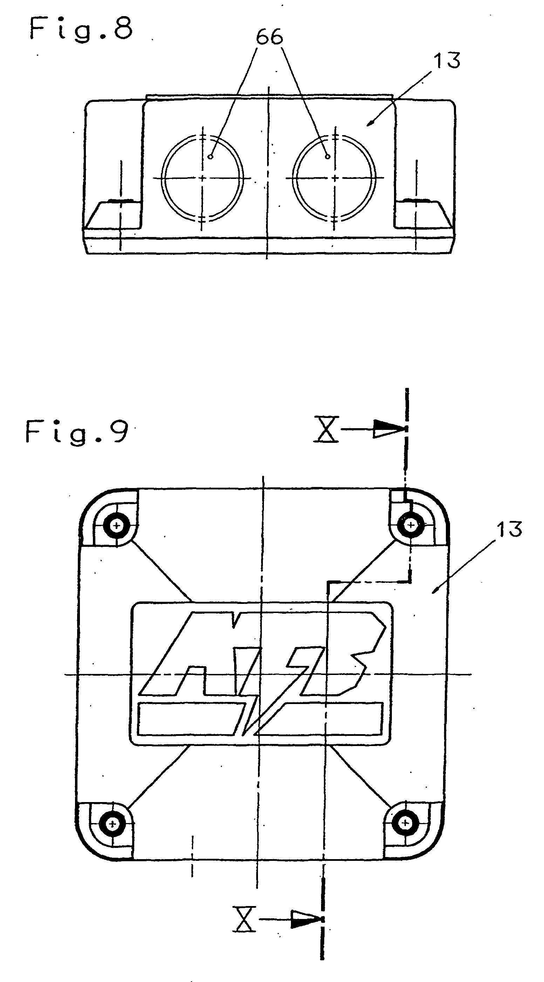

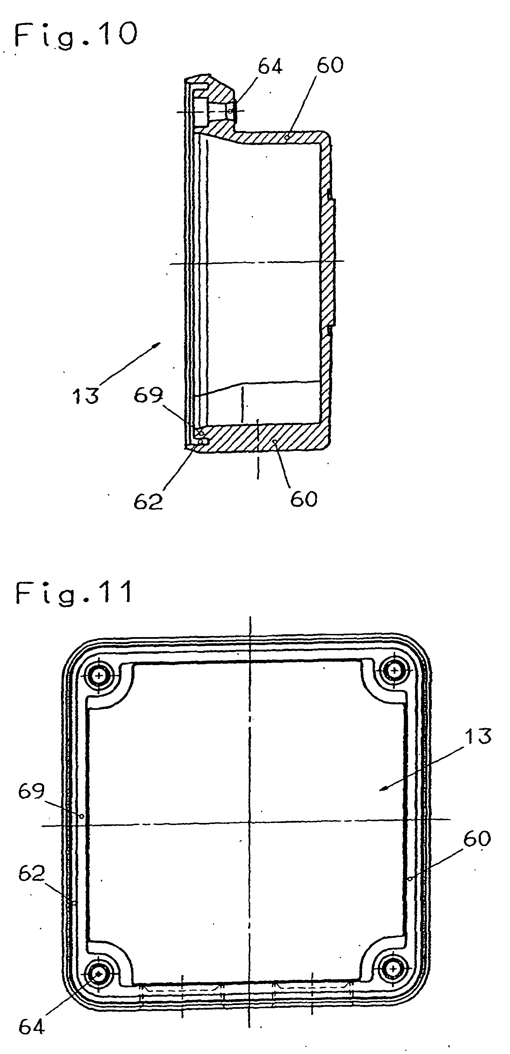

Nachstehend wird die Ausführungsform des erfindungsgemäßen Klemmkastens, die in den Fig. 8 bis 16 gezeigt ist, beschrieben:

Der in den Fig. 8 bis 11 gezeigte Deckel 13 des Klemmkastens 10 ist höher ausgebildet als der Deckel 13 des Klemmkastens 10, wie er beispielsweise in Fig. 1 gezeigt ist. Dementsprechend sind die Seitenwände 61 des Unterteils 12 des Klemmkastens 10 bei dieser Ausführungsform kürzer ausgebildet, d.h. die Teilungsebene zwischen Deckel 13 und Unterteil 12 ist zum Statorgehäuse 4, an dem der Klemmkasten 10 zu befestigen ist, hin versetzt. Dies bietet den Vorteil, daß der Innenraum des Klemmkastens 10 für das Herstellen der erforderlichen Anschlüsse und das Befestigen von im Klemmkasten 10 unterzubringenden Bauteilen gut zugänglich ist, da am Unterteil 12 keine störenden Seitenwände 61 vorgesehen sind.

Der freie Rand der Seitenwände 60 des Deckels 13 des Klemmkastens 10 ist mit einer ringsum laufenden Nut 62 versehen, in die bei am Unterteil 12 montierten Deckel 13 des Klemmkastens 10 eine ringsum laufende Rippe 63, die vom Unterteil 12 nach oben absteht, eingreift, so daß zwischen Deckel 13 und Unterteil 12 des Klemmkastens 10 eine ringsum laufende Labyrinthdichtung gebildet ist.

Im Deckel 13 sind vier Durchgangslöcher 64 vorgesehen, die im Bereich seiner Ecken angeordnet sind und Schrauben aufnehmen, welche in entsprechende Löcher 65 im Unterteil 13 eingreifen, damit der Deckel 13 am Unterteil 12 befestigt werden kann.

In wenigstens einer der Seitenwände 60 des Deckels 13 sind herausbrechbare Wandteile 66 vorgesehen, so daß wahlweise und bei Bedarf Öffnungen für das Herausführen von Leitungen aus dem Klemmkasten 10 geschaffen werden können.

Der in den Fig. 12 bis 16 gezeigte Unterteil 12 des Klemmkastens 10 weist die Durchgangsöffnung 20 auf, von der der Stutzen 24 nach unten weist. Der Stutzen 24 ist mit Abstand außerhalb von dem nach unten weisenden Kragen 25 umgeben. Im Boden des Unterteils 12 sind bei dieser Ausführungsform zwei Durchgangslöcher 21 und 22 vorgesehen, von welchen Krägen 26, 27 nach unten weisen. Diese Durchgangslöcher 21, 22 dienen zum Befestigen des Unterteils 12 am Statorgehäuse 4, wobei Befestigungsschrauben in Sacklöcher 47 in den hülsenförmigen Ausformungen 46 der Befestigungsansätze 44 des Statorgehäuses 4 eingreifen. Die in den Fig. 12 bis 17 dargestellte Ausführungsform fällt hinsichtlich der nur zwei Durchgangslöcher 21, 22 nicht unter den Schutzbereich des Patentes.

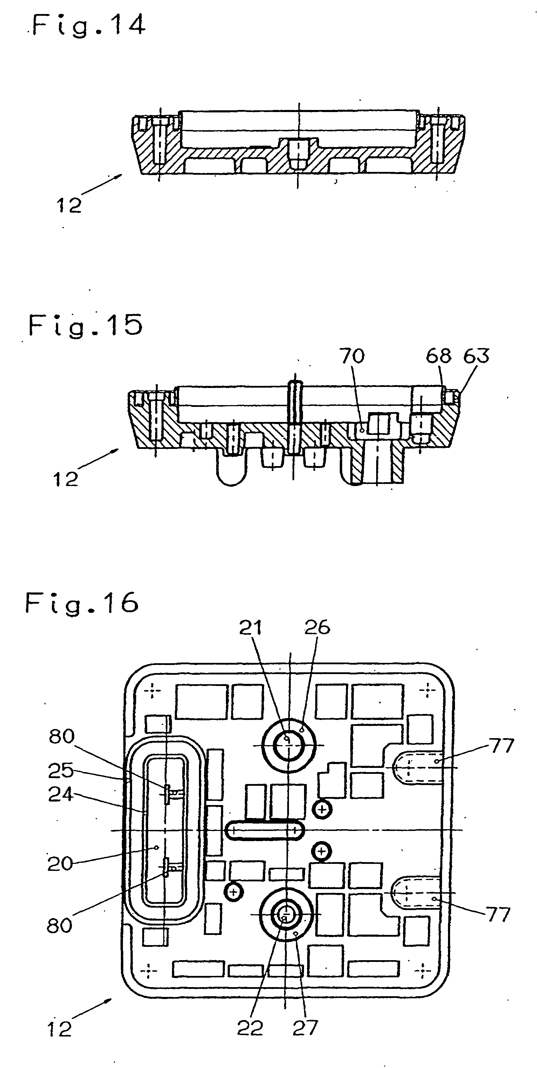

Wie insbesondere Fig. 12 und 15 zeigen, ist im Bereich des Loches 21 an der Innenseite des Bodens 14 des Unterteils 12 eine Vertiefung 70 vorgesehen, in der der Schenkel eines Anschlußwinkels für eine Erdung ("Erdungsbügel") mit Hilfe der Befestigungsschraube festgelegt werden kann. Durch das Anordnen dieses Winkels, der beispielsweise aus Messing besteht, ist es möglich, eine Erdungsleitung, die meist aus Kupfer besteht, nicht unmittelbar an das aus Aluminiumlegierung bestehenden Statorgehäuse 4 anzuschließen, so daß eine ungünstige Werkstoffpaarung Aluminium-Kupfer, welche Korrosionen bedingt, vermieden wird.

Vom Boden des Unterteils 12 des Klemmkastens 10 stehen in seinem Innenraum zwei Zapfen 75 ab, die zum Befestigen einer Blockklemme durch einfaches Aufschieben verwendet werden können. Neben diesen Zapfen 75 ist im Boden 14 des Unterteils 12 des Klemmkastens 10 ein herausbrechbarer Wandteil 76 vorgesehen. Durch ein durch Herausbrechen des Wandteils 76 gebildetes Loch können Leitungen aus dem Klemmkasten 10 herausgeführt werden. Wie insbesondere Fig. 13 zu entnehmen ist, ist unterhalb dieses herausbrechbaren Wandteils 76 ein von einer gebogenen Wand 77 begrenzter Kanal 78, der zum seitlichen Rand des Unterteils 12 hin führt, vorgesehen, so daß durch das Loch aus dem Klemmkasten 10 herausgeführte Leitungen geschützt sind.

Im Bereich der Durchgangsöffnung 20 sind im Unterteil 12 nach innen abstehend zwei etwa T-förmige Haken 80 vorgesehen. Diese Haken 80 dienen zum Einhängen eines elastischen Ringes, z.B. eines Gummiringes, mit dem im Klemmkasten 10 ein Bauteil festgelegt werden kann. Der elastische Ring, der zum Festlegen dieses Bauteils, z.B. eines Kondensators, dient, wird am den Haken 80 gegenüberliegenden Ende zwischen den Zapfen 75 angeordnet und durch eine auf die Zapfen 75 aufgeschobene Blockklemme gehalten.

Aus Fig. 12 und Fig. 13 ist erkennbar, daß innerhalb der in die Nut 62 am freien Rand der Wand 60 des Deckels 13 eingreifenden Rippe 63 eine weitere Rippe 68 vorgesehen ist, die an die innere Begrenzungswand 69 der Nut 62 am freien Rand der Wand 60 des Deckels 13 von innen her anliegt und die Labyrinthdichtung zwischen Unterteil 12 und Deckel 13 des Klemmkastens 10 vervollständigt.

An der Innenseite des Unterteils 12 des Klemmkastens 10 sind mehrere Sacklöcher vorgesehen, die gegebenfalls mit Gewinde versehen sein können, um beliebige Bauteile im Klemmkasten festlegen zu können. Beispielsweise können in dem erfindungsgemäßen Klemmkasten bei beiden Ausführungsformen wahlweise Blockklemmen, Kondensator, Anlaufrelais, Gleichrichter, Klemmbretter und/oder Kombinationen der vorgenannten Bauteile untergebracht werden.

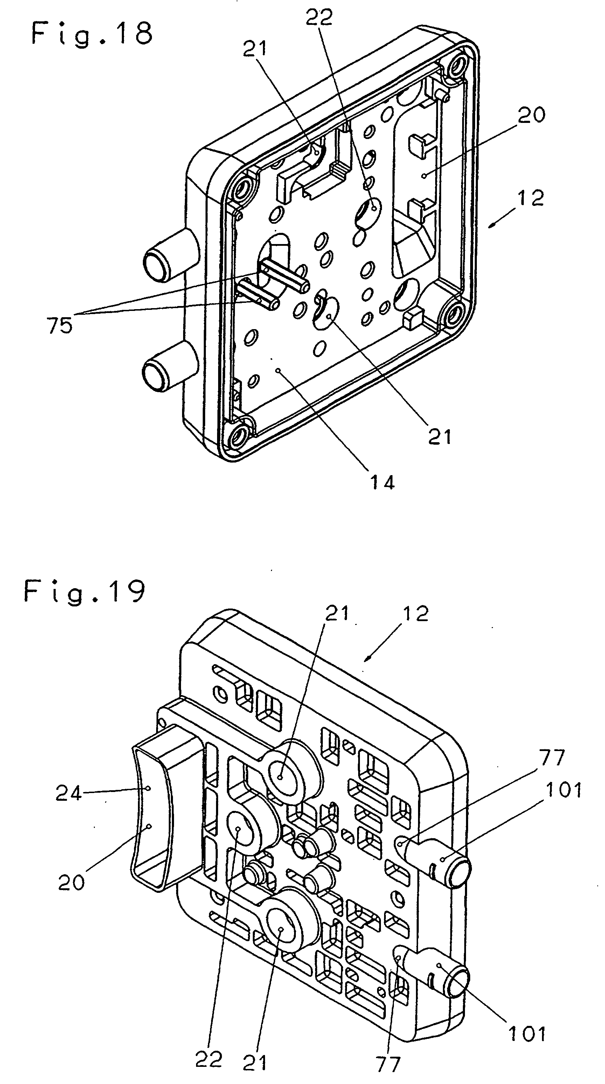

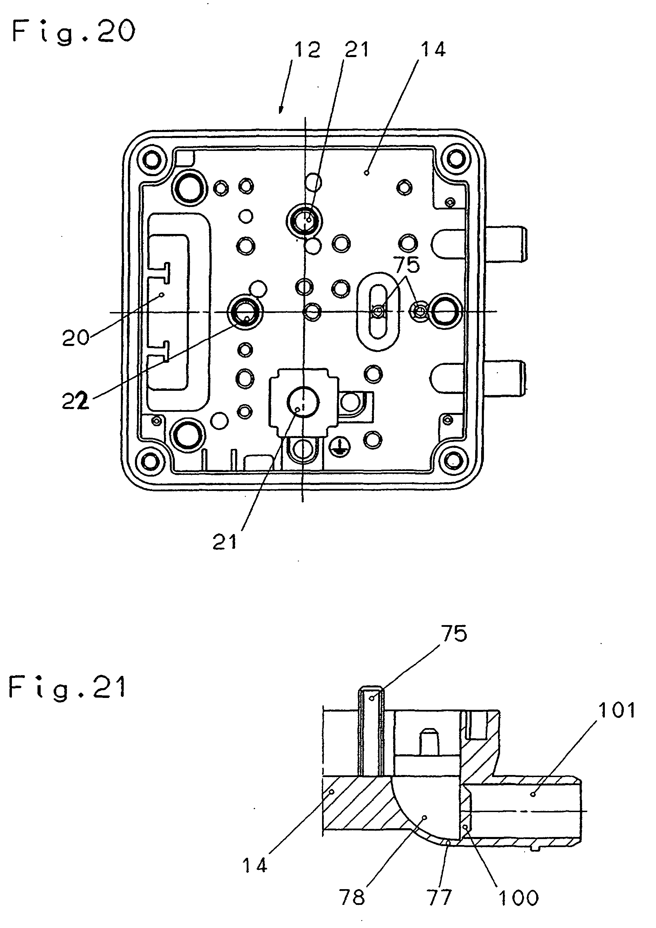

Der in den Fig. 18 bis 21 gezeigte Klemmkasten 10 besteht aus einem am Statorgehäuse eines Elektromotors zu befestigenden Unterteil 12 und einem (nicht gezeigten) Deckel, der mit dem Unterteil 12 beispielsweise mit Hilfe von Schrauben verbunden werden kann.

Im Boden 14 des Unterteils 12 des Klemmkastens 10 sind eine längliche Durchgangsöffnung 20 sowie drei Löcher 21, 22 für Befestigungsschrauben, mit denen der Unterteil 12 am Statorgehäuse 4 befestigt werden kann, vorgesehen. Rings um die Durchgangsöffnung 20 für zur Wicklung des Stators 3 führende Litzen ist ein vom Boden 14 des Unterteils 12 des Klemmkastens 10 nach unten weisender Stutzen 24 vorgesehen.

Vom Boden 14 des Unterteils 12 des Klemmkastens stehen nach innen (oben) zwei Zapfen 75 ab, die zum Befestigen einer Blockklemme durch einfaches Aufschieben verwendet werden können.

An der Innenseite des Bodens 14 des Unterteils 12 des Klemmkastens 10 sind mehrere nicht näher bezeichnete Sacklöcher vorgesehen, die gegebenenfalls mit Gewinde versehen sein können, um im Klemmkasten 10 beliebige Bauteile festlegen zu können. Beispielsweise können so wahlweise im Klemmkasten 10 Blockklemmen, Kondensator, Anlaufrelais, Gleichrichter, Klemmbretter und/oder Kombinationen der vorgenannten Bauteile befestigt werden.

Vom Innenraum des Unterteils 12 gehen bogenförmige Kanäle 78 aus, die an der Unterseite des Bodens 14 von gebogenen Wänden 77 begrenzt werden. Das an der Innenfläche des Bodens 14 liegende Ende jedes Kanals 78 ist zum Innenraum des Klemmkastens hin offen. Nach außen hin ist jeder Kanal 78 zunächst durch einen heraustrennbaren Wandteil 100 verschlossen. An jeden Kanal 78 schließt sich ein seitlich vom Unterteil 12 des Klemmkastens abstehender, rohrstutzenartiger Ansatz 101 an.

Nach dem Aufschlagen, also Wegbrechen des Wandteils 100 kann durch den Rohrstutzen 101 und den Kanal 78 eine elektrische Leitung, z.B. ein Kondensatorkabel, in den Klemmkasten 10 eingeführt und an einen Bauteil, der im Klemmkasten befestigt ist, angeschlossen werden. Beispielsweise wird ein Kondensatorkabel an einem im Klemmkasten 10 untergebrachten Klemmbrett oder an einer Blockklemme angeschlossen.

Um eine Zugentlastung der durch den Rohrstutzen 101 und den Kanal 78 in den Klemmkasten 10 geführten, elektrischen Leitung zu erreichen, kann über den Rohrstutzen 101 eine Schrumpfhülse geschoben werden, durch die auch das elektrische Kabel, das in den Klemmkasten 10 eingeführt ist, gesteckt ist. Durch Wärmebehandlung schrumpft die Schrumpfhülse auf den Rohrstutzen 101 und das elektrische Kabel, so daß dieses sicher festgehalten wird. Zusätzlich kann der Schrumpfschlauch innen mit einer Klebschicht versehen sein, um den Sitz des Kabels noch zu erhöhen.

Der Klemmkasten 10 kann aus Kunststoff oder aus Metall beispielsweise im Spritzgußverfahren hergestellt werden. Es besteht auch die Möglichkeit, den Unterteil 12 des Klemmkastens 10 aus Kunststoff und den Deckel 13, insbesondere bei der Ausführungsform gemäß Fig. 8 bis 16, aus Metall auszuführen, was den Vorteil hat, daß Wärme aus dem Klemmkasten 10 gut abgeleitet wird, wenn in diesem bei Betrieb des Elektromotors Wärme abgebende Bauteile aufgenommen sind.

Wie bereits angedeutet, können am Statorgehäuse 4 bis zu drei Klemmkästen 10 befestigt werden, so daß genügend geschützter Aufnahmeraum für weitere elektrische und/oder elektronische Komponenten vorgesehen werden kann.

Zusammenfassend kann ein Ausführungsbeispiel der Erfindung wie folgt beschrieben werden:

Ein am Statorgehäuse 4 eines Elektromotors 1 befestigter Klemmkasten 10 weist in seinem Boden eine Durchgangsöffnung 20 für zur Statorwicklung führende Litzen auf. Die Durchgangsöffnung 20 ist von einem Stutzen 24 umgeben, der durch eine Durchgangsöffnung 42 im Statorgehäuse 4 greift. Mit Abstand außerhalb des Stutzens 24 ragt vom Boden 14 des Klemmkastens 10 ein Kragen 25 weg. Zwischen den Stutzen 24 und den Kragen 25 greift eine die Durchgangsöffnung 42 im Statorgehäuse 4 umgebender Ansatz 43 ein. Zum Befestigen des Klemmkastens 10 am Statorgehäuse 4 sind im Boden des Klemmkastens 10 drei Befestigungsöffnungen 21, 22 vorgesehen, die von rohrförmigen Ansätzen 26, 27 umgeben sind. Von der Außenseite des Statorgehäuses 4 stehen hülsenförmige Ausformungen 46 ab, die in die rohrförmigen Ansätze 26, 27 im Bereich der Befestigungsöffnungen 21, 22 eingreifen. So sind im Bereich der Durchgangsöffnung 20/42 und der Befestigungsöffnungen 21, 22 Labyrinthdichtungen ausgebildet. An der Außenseite des Statorgehäuses 4 sind mehrere Befestigungsstellen für einen Klemmkasten 10 vorgesehen, die jeweils aus einer Kombination aus Durchgangsöffnung 42 und hülsenförmigen Ausformungen 46 mit Sacklöchern 47 für die Aufnahme von Befestigungsschrauben bestehen. So kann der Klemmkasten 10 je nach den räumlichen Erfordernissen, die sich aus der Verwendung des Elektromotors ergeben, am Statorgehäuse 4 an einer oder mehreren seiner Befestigungsstellen befestigt werden.

## Patentansprüche

1. Statorgehäuse (4) für Elektromotoren (1) mit wenigstens einem am Statorgehäuse (4) befestigten Klemmkasten (10), wobei der Klemmkasten (10) mit einem von seiner Durchgangsöffnung (20) im Boden (14) abstehenden Stutzen (24) durch eine Durchgangsöffnung (42) im Statorgehäuse (4) greift, wobei drei Sacklöcher (47) zur Aufnahme von Schrauben vorgesehen sind, mit welchen der Klemmkasten (10) am Statorgehäuse (4) zu befestigen ist, wobei der Abstand wenigstens eines Sackloches (47) von der Durchgangsöffnung (42) im Statorgehäuse (4) kleiner als der Abstand der übrigen Sacklöcher (47) ist, und wobei zwei Sacklöcher (47) von der Quermittelebene (30) beabstandet sind, **dadurch gekennzeichnet, daß** am Statorgehäuse (4) drei Befestigungsansätze (44) vorgesehen sind, in welchen die Sacklöcher (47) aufgenommen sind, daß die Befestigungsansätze (44) symmetrisch zu einer Quermittelebene (30) der Durchgangsöffnung (42) im Statorgehäuse (4) angeordnet sind, daß der in Richtung der Quermittelebene (30) gemessene Abstand wenigstens eines Befestigungsansatzes (44) von der Durchgangsöffnung (42) im Statorgehäuse (4) kleiner als der Abstand der übrigen Befestigungsansätze (44) ist, und daß zwei Befestigungsansätze (44) von der Quermittelebene (30) beabstandet sind.

2. Statorgehäuse nach Anspruch 1, **dadurch gekennzeichnet, daß** rings um die Durchgangsöffnung (42) im Statorgehäuse (4) ein zum Klemmkasten (10) hin weisender Ansatz (43) vorgesehen ist, der von außen an dem Stutzen (24) des Klemmkastens (10) anliegt.

3. Statorgehäuse nach Anspruch 1 oder 2, **dadurch gekennzeichnet, daß** am Boden (14) des Unterteils (12) des Klemmkastens (10) ein in sich geschlossener, den Stutzen (24) umgebender Kragen (25) vorgesehen ist, der von außen an dem Ansatz (43), der um die Öffnung (42) im Statorgehäuse (4) herum angeordnet ist, anliegt.

4. Statorgehäuse nach einem der Ansprüche 1 bis 3, **dadurch gekennzeichnet, daß** die Schrauben gleichzeitig zum Befestigen von elektrischen Klemmenteilen und/oder Erdungsbügeln im Klemmkasten (10) dienen.

5. Statorgehäuse nach einem der Ansprüche 1 bis 4, **dadurch gekennzeichnet, daß** im Boden (14) des Klemmkastens (10) drei in ihrer Lage der Lage der Befestigungsansätze (44) entsprechende Löcher (21, 22) und um diese Löcher (21, 22) herum angeordnete Ansätze (26, 27) vorgesehen sind.

6. Statorgehäuse nach Anspruch 5, **dadurch gekennzeichnet, daß** die um die Löcher (21, 22) herum angeordneten Ansätze (26, 27) über Versteifungsrippen mit dem Stutzen (24) verbunden sind.

7. Statorgehäuse nach einem der Ansprüche 1 bis 7, **dadurch gekennzeichnet, daß** am Boden (14) des Klemmkastens (10) außen mehrere Zentriervorsprünge (23) vorgesehen sind und daß am Statorgehäuse (4) mit den Zentriervorsprüngen (23) zusammenwirkende Ausformungen (48) vorgesehen sind.

8. Statorgehäuse nach Anspruch 8, **dadurch gekennzeichnet, daß** die Ausformungen (48) am Statorgehäuse (4) Verdickungen von Kühlrippen (40) sind.

9. Statorgehäuse nach einem der Ansprüche 1 bis 10, **dadurch gekennzeichnet, daß** die Durchgangsöffnung (42) im Statorgehäuse (4) durch einen heraustrennbaren Deckel (41) verschlossen ist.

10. Statorgehäuse nach Anspruch 11, **dadurch gekennzeichnet, daß** der Deckel (41) über eine Sollbruchstelle mit dem Rand der Durchgangsöffnung (42) einstückig ausgeführt ist.

11. Statorgehäuse nach einem der Ansprüche 1 bis 12, **dadurch gekennzeichnet, daß** am Statorgehäuse (4) mehrere Befestigungsstellen für einen Klemmkasten (10) vorgesehen sind.

12. Statorgehäuse nach Anspruch 13, **dadurch gekennzeichnet, daß** Befestigungsstellen für einen Klemmkasten (10) sowohl an der den Füßen (11) des Statorgehäuses (4) gegenüberliegenden Oberseite, als auch an der rechts und links liegenden Seite des Statorgehäuses (4) vorgesehen sind.

13. Statorgehäuse nach Anspruch 13 oder 14, **dadurch gekennzeichnet, daß** die Befestigungsstellen jeweils aus einer Kombination aus einer Durchgangsöffnung (42) mit Ansatz (43) und aus Befestigungsansätzen (44) mit Sacklöchern (47) bestehen.

14. Statorgehäuse nach einem der Ansprüche 1 bis 15, **dadurch gekennzeichnet, daß** vom Boden (14) des Unterteils des Klemmkastens (10) in das Innere des Klemmkastens (10) abstehende Zapfen (75) vorgesehen sind, auf die eine Blockklemme aufschiebbar ist.

15. Statorgehäuse nach Anspruch 16, **dadurch gekennzeichnet, daß** neben den Zapfen (75) im Boden (14) des Unterteils (12) des Klemmkastens (10) ein herausbrechbarer Wandteil (76) vorgesehen ist und daß an der dem Statorgehäuse (4) zugekehrten Seite des Bodens (14) des Unterteils (12) des Klemmkastens (10) ein zum Rand des Unterteils (12) hin führender Kanal (78) vorgesehen ist.

16. Statorgehäuse nach einem der Ansprüche 1 bis 17, **dadurch gekennzeichnet, daß** im Boden (14) des Unterteils (12) des Klemmkastens im Bereich eines Loches (21) eine Vertiefung (70) vorgesehen ist, in der ein Schenkel eines Erdungsbügels aufgenommen und mit Hilfe der Befestigungsschraube festlegbar ist.

17. Statorgehäuse nach einem der Ansprüche 1 bis 18, **dadurch gekennzeichnet, daß** im Bereich der Durchgangsöffnung (20) wenigstens ein hakenförmiger Ansatz (80) vorgesehen ist.

18. Statorgehäuse nach einem der Ansprüche 1 bis 19, **dadurch gekennzeichnet, daß** an dem dem Unterteil (12) zugekehrten Rand der Seitenwand (60) des Deckels (13) eine ringsum laufende Nut (62) vorgesehen ist, in die eine ringsum laufende Rippe (63) des Unterteils (12) eingreift.

19. Statorgehäuse nach einem der Ansprüche 1 bis 20, **dadurch gekennzeichnet, daß** innerhalb der ringsum laufenden Rippe (63) des Unterteils (12) eine weitere Rippe (68) vorgesehen ist, die an der die Nut (62) des Deckels nach innen begrenzende Leiste (69) von innen her anliegt.

20. Statorgehäuse nach einem der Ansprüche 1 bis 21, **dadurch gekennzeichnet, daß** am Statorgehäuse (4) ein oder zwei weitere Klemmkästen (10) befestigt sind, in welchen weitere elektrische oder elektronische Komponenten aufgenommen sind.

21. Statorgehäuse nach einem der Ansprüche 1 bis 15 und 18 bis 22, **dadurch gekennzeichnet, daß** im Boden (14) des Unterteils (12) des Klemmkastens (12) wenigstens ein Kanal (78) vorgesehen ist, der aus dem Klemmkasten (10) herausführt.

22. Statorgehäuse nach Anspruch 23, **dadurch gekennzeichnet, daß** der Kanal (78) unten, seitlich aus dem Unterteil (12) des Klemmkastens (10) herausführt.

23. Statorgehäuse nach Anspruch 23 oder 24, **dadurch gekennzeichnet, daß** der Kanal (78) viertelkreisförmig gebogen ist.

24. Statorgehäuse nach einem der Ansprüche 23 bis 25, **dadurch gekennzeichnet, daß** der Kanal (78) an der Unterseite des Bodens (14) des Unterteils (12) des Klemmkastens durch eine gebogene Wand (77) begrenzt ist.

25. Statorgehäuse nach einem der Ansprüche 23 bis 26, **dadurch gekennzeichnet, daß** der Kanal (78) durch einen rohrförmigen Ansatz (101) über die Umrißform des Klemmkasten (10) seitlich hinaus verlängert ist.

26. Statorgehäuse nach einem der Ansprüche 23 bis 27, **dadurch gekennzeichnet, daß** in dem Kanal (78) ein diesen verschließender Wandteil (100) vorgesehen ist.

27. Statorgehäuse nach Anspruch 28, **dadurch gekennzeichnet, daß** der Wandteil (100) zum Herausbrechen vorbereitet ist.

28. Statorgehäuse nach einem der Ansprüche 27 bis 29, **dadurch gekennzeichnet, daß** über den Rohrstutzen (101) eine Schrumpfhülse zum Festlegen eines durch den Kanal (78) eingeführten Kabels, insbesondere eines Kondensatorkabels, geschoben ist.

## Claims

1. Stator housing (4) for an electromotor (1), having at least one terminal box (10) secured to the stator housing (4), the terminal box (10) engaging with a connection piece (24) protruding from its through opening (20) in the base (14) through a through opening (42) in the stator housing (4), three blind holes (47) being provided to receive screws, by means of which the terminal box (10) is to be secured to the stator housing (4), the distance of at least one blind hole (47) from the through opening (42) in the stator housing (4) being smaller than the distance of the other blind holes (47), and two blind holes (47) being spaced apart from the transverse mid-plane (30), **characterised in that** there are provided on the stator housing (4) three fastening projections (44), in which the blind holes (47) are received, **in that** the fastening projections (44) are arranged symmetrically with respect to a transverse mid-plane (30) of the through opening (42) in the stator housing (4), **in that** the distance, measured in the direction of the transverse mid-plane (30), of at least one fastening projection (44) from the through opening (42) in the stator housing (4) is smaller than the distance of the other fastening projections (44), and **in that** two fastening projections (44) are spaced apart from the transverse mid-plane (30).

2. Stator housing according to claim 1, **characterised in that** there is provided around the through opening (42) in the stator housing (4) a shoulder (43) which points towards the terminal box (10) and which abuts from the outside against the connection piece (24) of the terminal box (10).

3. Stator housing according to claim 1 or 2, **characterised in that** on the base (14) of the lower part (12) of the terminal box (10) is provided a collar (25) which is closed on itself and surrounds the connection piece (24) and which abuts from outside against the shoulder (43) which is arranged around the opening (42) in the stator housing (4).

4. Stator housing according to one of claims 1 to 3, **characterised in that** the screws serve simultaneously to secure electrical terminal parts and/or earthinging clips in the terminal box (10).

5. Stator housing according to one of claims 1 to 4, **characterised in that** in the base (14) of the terminal box (10) are provided three holes, corresponding in their position to the position of the fastening projections (44), and shoulders (26, 27) arranged around these holes (21, 22).

6. Stator housing according to claim 5, **characterised in that** the shoulders (26, 27), which are arranged around the holes (21, 22), are connected to the connection piece (24) via stiffening ribs.

7. Stator housing according to one of claims 1 to 6, **characterised in that** on the outside of the base (14) of the terminal box (10) is provided a plurality of centring protrusions (23) and **in that** shaped portions (48) are provided on the stator housing which cooperate with the centring protrusions (23).

8. Stator housing according to claim 7, **characterised in that** the shaped portions (48) on the stator housing (4) are thickenings of cooling ribs (40).

9. Stator housing according to one of claims 1 to 8, **characterised in that** the through opening (42) in the stator housing (4) is closed by a separable cover (41).

10. Stator housing according to claim 9, **characterised in that** the cover (41) is realised as one piece with the edge of the through opening (42) via a predetermined breaking point.

11. Stator housing according to one of claims 1 to 10, **characterised in that** a plurality of fastening points for a terminal box (10) is provided on the stator housing (4).

12. Stator housing according to claim 11, **characterised in that** fastening points for a terminal box (10) are provided both on the upper side facing the feet (11) of the stator housing (4) and on the sides of the stator housing (4) lying on the right and on the left.

13. Stator housing according to claim 11 or 12, **characterised in that** the fastening points each comprise a combination of a through opening (42) with a shoulder (43) and fastening projections (44) with blind holes (47).

14. Stator housing according to one of claims 1 to 13, **characterised in that** journals (75) are provided which protrude from the base (14) of the lower part of the terminal box (10) into the inside of the terminal box (10) and which can be pushed onto a block terminal.

15. Stator housing according to claim 14, **characterised in that** beside the journals (75) in the base (14) of the lower part (12) of the terminal box (10) is provided a detachable wall portion (76), and **in that** a channel (78) leading to the edge of the lower part (12) of the terminal box (10) is provided on the side of the base (14) of said lower part (12) which faces the stator housing (4).

16. Stator housing according to one of claims 1 to 15, **characterised in that** there is provided in the base (14) of the lower part (12) of the terminal box, in the region of a hole (21), a depression (70) in which an arm of an earthing clip is received and may be fixed with the aid of the fastening screw.

17. Stator housing according to one of claims 1 to 16, **characterised in that** at least one hook-shaped shoulder (80) is provided in the region of the through opening (20).

18. Stator housing according to one of claims 1 to 17, **characterised in that** there is provided on the edge, facing the lower part (12), of the side wall of the cover (13) a circumferential groove (62) into which a circumferential rib (63) of the lower part (12) engages.

19. Stator housing according to one of claims 1 to 20, **characterised in that** inside the circumferential rib (63) of the lower part (12) is provided an additional rib (68) which abuts from the inside against the strip (69) which delimits inwards the groove (62) of the cover.

20. Stator housing according to one of claims 1 to 19, **characterised in that** there are secured to the stator housing (4) one or two additional terminal boxes (10) in which additional electrical or electronic components are accommodated.

21. Stator housing according to one of claims 1 to 13 and 16 to 20, **characterised in that** in the base (14) of the lower part (12) of the terminal box (10) is provided at least one channel (78) which leads out of the terminal box (10).

22. Stator housing according to claim 21, **characterised in that** the channel (78) leads out below and laterally from the lower part (12) of the terminal box (10).

23. Stator housing according to claim 21 or 22, **characterised in that** the channel (78) is curved in the shape of a quarter-circle.

24. Stator housing according to one of claims 21 to 23, **characterised in that** the channel (78) is delimited on the underside of the base (14) of the lower part (12) of the terminal box by a curved wall (77).

25. Stator housing according to one of claims 21 to 24, **characterised in that** the channel (78) is extended laterally by a tubular shoulder (101) beyond the contour of the terminal box (10).

26. Stator housing according to one of claims 21 to 25, **characterised in that** in the channel (78) is provided a wall portion (100) which closes said channel.

27. Stator housing according to claim 26, **characterised in that** the wall portion (100) is prepared for being broken out.

28. Stator housing according to one of claims 27 to 29, **characterised in that** a shrink-on sleeve is pushed over the connection piece (101) to fix a cable inserted through the channel (78), especially a capacitor cable.

## Revendications

1. Carcasse (4) pour moteur électrique (1) comportant au moins une boîte à bornes (10) qui, par une tubulure (24) en saillie sur son ouverture de passage (20) dans son fond (14), est engagée dans la carcasse (4) à travers une ouverture de passage (42) de celle-ci, trois trous borgnes (47) étant prévus pour accueillir des vis destinées à fixer la boîte à bornes (10) sur la carcasse (4), la distance séparant au moins un trou borgne (47) de l'ouverture de passage (42) dans la carcasse (4) étant inférieure à la distance des autres trous borgnes (47) deux trous borgnes (47) étant espacés du plan médian transversal (30), **caractérisé en ce que**
- sur la carcasse (4) sont prévus trois appendices de fixation (44) dans lesquels sont logés les trous borgnes (47) et qui sont symétriques par rapport au plan médian transversal (30) de l'ouverture de passage (42) dans la carcasse (4)
- la distance, mesurée selon la direction du plan médian transversal (30) entre au moins un appendice de fixation (44) et l'ouverture de passage (42) dans la carcasse (4), est inférieure à la distance des autres appendices de fixation (44), deux appendices de fixation (44) étant espacés du plan médian transversal (30).

2. Carcasse selon la revendication 1, **caractérisée en ce qu'**autour de l'ouverture de passage (42) dans la carcasse (4) il est prévu un appendice (43) dirigé vers la boîte à bornes (10) et qui est en contact de l'extérieur avec la tubulure (24) de la boîte à bornes (10).

3. Carcasse selon la revendication 1 ou 2, **caractérisée en ce que** sur le fond (14) de la partie inférieure (12) de la boîte à bornes (10) il est prévu un collet (25) fermé sur lui-même et qui entoure la tubulure (24), en étant en contact de l'extérieur avec l'appendice (43) qui entoure l'ouverture (42) dans la carcasse (4).

4. Carcasse selon une des revendications 1 à 3, **caractérisée en ce que** les vis servent en même temps à fixer des parties de bornes électriques et/ou des étriers de mise à la terre dans la boîte à bornes (10).

5. Carcasse selon une des revendications 1 à 4, **caractérisée en ce qu'**il est prévu dans le fond (14) de la boîte à bornes (10) trois trous (21, 22) dont la position correspond à celle des appendices de fixation (44) et, entourant ces trous, des appendices (26, 27).

6. Carcasse selon la revendication 5, **caractérisée en ce que** les appendices (26, 27) disposés autour des trous (21, 22) sont reliés par des nervures de raidissement à la tubulure (24).

7. Carcasse selon une des revendications 1 à 6, **caractérisée en ce qu'**il est prévu sur le fond (14) de la boîte à bornes (10) vers l'extérieur plusieurs saillies de centrage (23) et, sur la carcasse (4) des parties en relief (48) coopérant avec les saillies de centrage (23).

8. Carcasse selon la revendication 7, **caractérisée en ce que** les parties en relief (48) sur la carcasse (4) sont constituées par des surépaisseurs des nervures de refroidissement (40).

9. Carcasse selon une des revendications 1 à 8, **caractérisée en ce que** l'ouverture de passage (42) dans la carcasse (4) est obturée par un couvercle (41) qui peut être arraché.

10. Carcasse selon la revendication 9, **caractérisée en ce que** le couvercle (41) peut être réalisé monobloc avec le bord de l'ouverture de passage (42) par l' intermédiaire d'une zone de rupture imposée.

11. Carcasse selon une des revendications 1 à 10, **caractérisée en ce que** sur la carcasse (4) sont prévus plusieurs endroits de fixation pour une boîte à bornes (10).

12. Carcasse selon la revendication 11, **caractérisée en ce qu'**il est prévu des endroits de fixation pour une boîte à bornes (10) aussi bien sur la surface de la carcasse (4) située à l'opposé des pieds (11) que sur le côté gauche ou droit de cette carcasse.

13. Carcasse selon la revendication 11 ou 12, **caractérisée en ce que** les endroits de fixation sont composés chacun de la combinaison d'une ouverture de passage (42) avec son appendice (43) et d'appendices de fixation (44) avec leurs trous borgnes (47).

14. Carcasse selon une des revendications 1 à 13, **caractérisée en ce que** sur le fond (14) de la partie inférieure de la boîte à bornes (10) sont prévus, en saillie vers l'intérieur de cette boîte, des ergots (75) sur lesquels peut être montée par coulissement une pince de blocage.

15. Carcasse selon la revendication 14, **caractérisée en ce qu'**en plus de l'ergot (75) sur le fond (14) de la partie inférieure (12) de la boîte à bornes (10) il est prévu une partie de paroi (76) arrachable et, sur le côté du fond (14) tourné vers la carcasse (4) un canal (78) conduisant au bord de la partie inférieure (12).

16. Carcasse selon une des revendications 1 à 15, **caractérisée en ce que** sur le fond (14) de la partie inférieure (12) de la boîte à bornes (10) il est prévu dans la zone d'un trou (21) une cavité (70) dans laquelle est logée une branche d'un étrier de mise à la terre qui peut être maintenue par une vis de fixation.

17. Carcasse selon une des revendications 1 à 16, **caractérisée en ce que** dans la zone de l'ouverture de passage (20) il est prévu au moins un appendice (80) en forme de crochet.

18. Carcasse selon une des revendications 1 à 17, **caractérisée en ce que** le long du bord tourné vers la partie inférieure (12), de la paroi latérale (60) du couvercle (13), est prévue une rainure périphérique (62) dans laquelle est engagée une nervure périphérique (63) de la partie inférieure (12).

19. Carcasse selon une des revendications 1 à 18, **caractérisée en ce qu'**il est prévu à l'intérieur de la nervure périphérique (63) de la partie inférieure (12) une autre nervure (68) qui est appliquée de l'intérieur sur la barrette (69) délimitant vers l'intérieur la rainure (62) du couvercle.

20. Carcasse selon une des revendications 1 à 19, **caractérisée en ce que** sur la carcasse (4) sont fixées une ou deux autres boîtes à bornes (10) dans lesquelles sont logés d'autres composants électriques ou électroniques.

21. Carcasse selon une des revendications 1 à 15 et 18 à 20, **caractérisée en ce que** dans le fond (14) de la partie inférieure (12) de la boîte à bornes (10), il est prévu au moins un canal (78) qui sort de la boîte à bornes (10).

22. Carcasse selon la revendication 21, **caractérisée en ce que** le canal (78) sort par le bas et latéralement de la partie inférieure (12) de la boîte à bornes (10).

23. Carcasse selon la revendication 21 ou 22, **caractérisée en ce que** le canal (78) est recourbé en quart de cercle.

24. Carcasse selon une des revendications 21 à 23, **caractérisée en ce que** le canal (78) est limité sur la face inférieure du fond ( 14) de la partie inférieure (12) de la boîte à bornes (10) par une paroi recourbée (77).

25. Carcasse selon une des revendications 21 à 24, **caractérisée en ce que** le canal (78) est prolongé latéralement au-delà du contour de la boîte à bornes (10) par un appendice tubulaire (101).

26. Carcasse selon une des revendications 21 à 25, **caractérisée en ce que** dans le canal (78) est prévue une partie de paroi (100) qui l'obture.

27. Carcasse selon la revendication 26, **caractérisée en ce que** la partie de paroi (100) est préformée pour pouvoir être arrachée.

28. Carcasse selon une des revendications 25 à 27, **caractérisée en ce que** sur la tubulure (101) est glissée une douille rétractile pour fixer un câble introduit à travers le canal (78), en particulier un câble de condensateur.
